# EUROPEAN PATENT SPECIFICATION

(11) **EP 4 191 952 B1**
(45) Date of publication and mention of the grant of the patent: **10.04.2024**
(21) Application number: 22158934.4
(22) Date of filing: 25.02.2022
(51) Int. Cl.: H04L 12/18, H04L 51/10

(54) **VIRTUAL ONLINE CONFERENCE SYSTEM AND CONFERENCE METHOD**
VIRTUELLES ONLINE-KONFERENZSYSTEM UND -KONFERENZVERFAHREN
SYSTÈME DE CONFÉRENCE VIRTUELLE EN LIGNE ET PROCÉDÉ DE CONFÉRENCE

(30) Priority: 03.12.2021 TW 110145229
(43) Date of publication of application: 07.06.2023
(73) Proprietor: NetKlass Technology Inc., Zhubei City, Hsinchu County 302082 (TW)
(72) Inventor: LEE, Ming-Tang, 302082 Zhubei City, Hsinchu County (TW)
(74) Representative: 2K Patentanwälte Blasberg Kewitz & Reichel

(56) References cited:
- WO-A1-95/00917
- US-A1- 2013 297 409
- US-A1- 2016 260 436

## Description

### BACKGROUND OF THE DISCLOSURE

### Technical Field

The present disclosure relates to a conference system and a conference method, and particularly relates to a virtual online conference system and a virtual online conference method.

### Description of Related Art

According to the innovation of technologies and the development of the Internet, online conferences recently became the most popular approach for meeting. By executing an online conference software on the computers, users at different places may join same online virtual meeting room, so as to perform video conference call directly online, which is very convenient.

However, when several people held a group meeting in a meeting room while at least one user jointed this group meeting at a remote place through the online conference software, it is necessary for each participant to respectively use a computer with the online conference software. Therefore, the remote user is able to see each of the participants in the meeting room and hear from each of them. US2013297409A1 discloses various embodiments of methods, systems, and computer for providing advertisements in a conference user interface. One embodiment is a method comprising: a conferencing system establishing a conference between a plurality of participants via a corresponding computing device connected to the conferencing system via a communication network; presenting a conference user interface to the computing devices, the conference user interface displaying each of the participants as a unique participant object in a virtual location; an online advertising platform selecting advertisement data from one or more advertisers; providing the selected advertisement data to the conferencing system; and displaying the advertisement data with an associated advertisement object in the virtual location during the conference.

US2016260436A1 describes an electronic device with a display, a microphone, and an input device: while the display is on, receiving user input via the input device, the user input meeting a predetermined condition; in accordance with receiving the user input meeting the predetermined condition, sampling audio input received via the microphone; determining whether the audio input comprises a spoken trigger; and in accordance with a determination that audio input comprises the spoken trigger, triggering a virtual assistant session.

WO9500917A1 describes a multimedia management system, comprising a plurality of host computer platforms and operating system software therefor, and video display screens and means for connecting the screens to the host computer platforms to provide easy access to a plurality of media sources, including video, audio, and communication sources. In order to enable facile access to the media sources, a pointing device provides horizontal and vertical coordinates to a selected computer platform, and a controllable interface system couples the media sources to a selected host computer platform. A large screen display can be coupled to the same information as displayed on one of the video display screens. The controllable interface system includes a programmable microprocessor and a bus system, a plurality of RS-232 interface cards connected to the bus system. Video and audio switching matrices selectively couple the plurality of media sources to a selected host computer and two or more display screens are positioned for common viewing by a user and the pointing device is a touch panel device. Speakers and a data entry device for recording responses are also included.

As discussed above, the current approach for online conference uses the video devices on the computers to implement a person-to-person connection, but it is inadequate for sharing a multi-person meeting, and it is inconvenient for a group-to-group based online conference.

### SUMMARY OF THE DISCLOSURE

The present disclosure is directed to a virtual online conference system and a virtual online conference method, according to independent claims 1 and 9, respectively.

In comparing with related art, the present disclosure may assist the user to satisfy the requirement of an online group conference through a minimum number of end-user apparatus, so as to simplify the apparatus required for the online conference and to reduce the complexity of the online conference.

### DESCRIPTION OF THE DRAWINGS

FIG. 1 is a schematic diagram of a virtual online conference system.
FIG. 2 is another schematic diagram of a virtual online conference system.
FIG. 3 is a flowchart of a conference method according to the present disclosure.
FIG. 4 is a block diagram of an end-user application according to the present disclosure.
FIG. 5 is a block diagram of a virtual video server according to the present disclosure.
FIG. 6 is a schematic diagram of a virtual online conference system according to the present disclosure.

### DETAILED DESCRIPTION

The present disclosure provides a virtual online conference system (referred to as a conference system hereinafter), the conference system may make one or more video devices in the environment (such as in a meeting room) to be wirelessly connected with an end-user apparatus (such as a personal computer (PC), a laptop, and a tablet, etc.), so as to make the video devices of the end-user apparatus to be wireless. When multiple users are in same meeting room and perform an online group conference with a remote user, it is unnecessary for every user in the meeting room to respectively use an individual computer. Even if the users in the meeting room have their own computers, but it is unnecessary for the users to respectively execute an online conference software. Therefore, the devices required for the online conference can be simplified, and the procedure complexity of the online conference can be reduced.

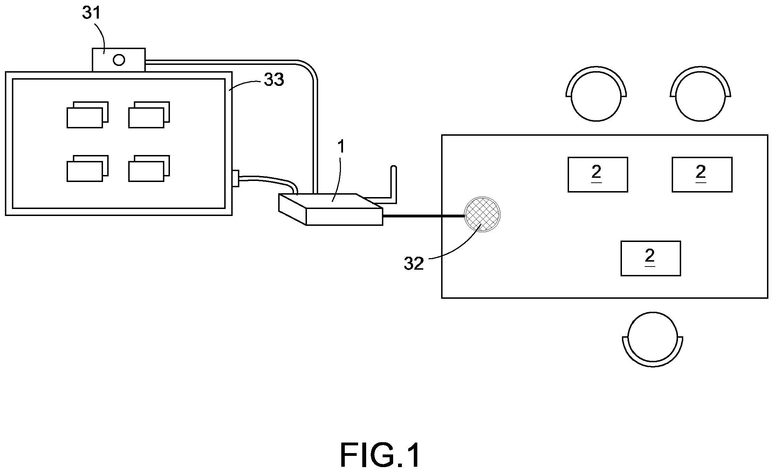

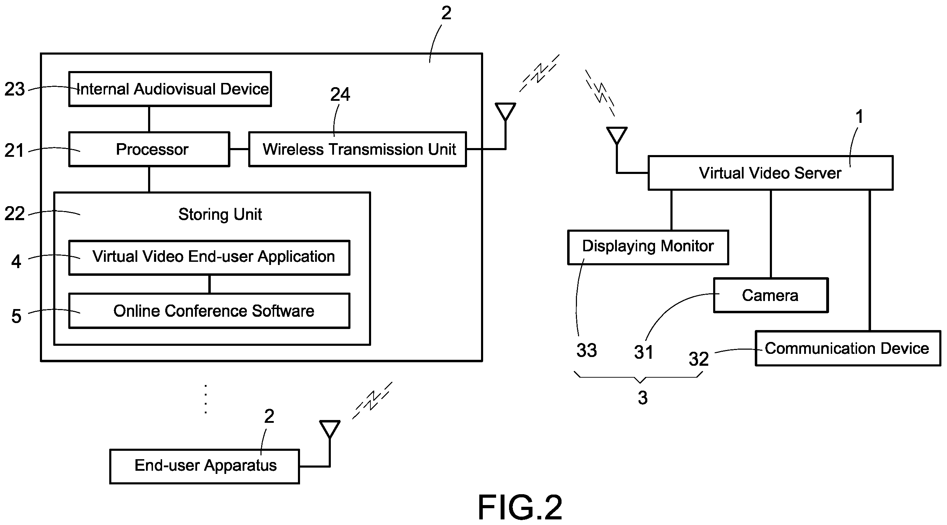

Refer to FIG. 1 and FIG. 2, wherein FIG. 1 is a schematic diagram of a virtual online conference system according to the present disclosure, and FIG. 2 is another schematic diagram of a virtual online conference system according to the present disclosure. As disclosed in FIG. 1 and FIG. 2, the conference system of the present disclosure includes a virtual video server 1 and a virtual video end-user application 4 (referred to as a server 1 and an end-user application 4 hereinafter), wherein the end-user application 4 is installed in and executed on an end-user apparatus 2.

As disclosed in FIG. 1, the server 1 of the present disclosure is used to connect with at least one external audiovisual device 3 to receive audiovisual data therefrom. The end-user application 4 establishes a wireless connection with the server 1 through hardware component(s) inside the end-user apparatus 2. Therefore, the end-user apparatus 2 may receive the audiovisual data of the one or more external audiovisual devices 3 connected with the server 1 through a streaming approach and may use the received audiovisual data as an input data of an online conference software 5.

In FIG. 1, the environment around the conference system is a meeting room. Generally, the external audiovisual devices 3 are placed in front of the meeting room, and the audiovisual data includes voice data and image data that encompass all people in the meeting room. When one end-user apparatus 2 in the meeting room executes the online conference software 5 and uses the audiovisual data obtained from the server 1 to be the input data of an online conference, it is assured that the participants of the online conference may obtain the voice data and the image data of all people in the meeting room.

The external audiovisual device 3 may be, for example but not limited to, a camera 31, a communication device 32, or a displaying monitor 33, etc., the audiovisual data may be voice and image, and the communication device 32 may include a speaker and a microphone. By using the conference system of the present disclosure, when a user uses the end-user apparatus 2 to launch an online conference, he or she may choose to obtain the audiovisual data through the audiovisual device embedded in the end-user apparatus 2, or to obtain the audiovisual data through the one or more external audiovisual devices 3 connected with the server 1.

As disclosed in FIG. 2, the end-user apparatus 2 includes a processor 21, a storing unit 22, an internal audiovisual device 23, and a wireless transmission unit 24, wherein the storing unit 22, the internal audiovisual device 23, and the wireless transmission unit 24 are respectively connected with the processor 21. The end-user apparatus 2 stores the end-user application 4 and the online conference software 5 in the storing unit 22. The end-user apparatus 2 executes the end-user application 4 through the processor 21 to establish the wireless connection with the server 1 and executes the online conference software 5 to launch an online conference with remote user(s).

The internal audiovisual device 23 indicates the audiovisual device(s) embedded in the end-user apparatus 2 or the audiovisual device(s) wirelessly connected with the end-user apparatus 2, such as a displaying monitor, a camera, and a communication device (for example, a speaker and a microphone), etc., but not limited thereto. When launching an online conference through the online conference software 5, the end-user apparatus 2 may obtain the required audiovisual data, such as a screen image, an image of the user, and a voice of the user, etc., through the internal audiovisual device 23 and use the obtained audiovisual data to be the input data of the online conference software 5. The problem to be solved by the present disclosure is that the audiovisual data obtained by the internal audiovisual device 23 is usually limited to a single user (i.e., the user/owner of the end-user apparatus 2) and is inadequate for a group meeting.

The wireless transmission unit 24 may be, for example but not limited to, a Wi-Fi transmission unit, a Bluetooth transmission unit, a near field communication (NFC) transmission unit, or a Zigbee transmission unit, etc. The end-user apparatus 2 may establish a wireless communication with the server 1 through the wireless transmission unit 24 based on the request given from the end-user application 4; therefore, the end-user apparatus 2 may obtain the audiovisual data of the one or more external audiovisual devices 3 connected with the server 1 under a streaming approach, and the end-user apparatus 2 may use the obtained audiovisual data to be the input data of the online conference software 5.

As shown in FIG. 1, when obtaining the audiovisual data through the external audiovisual devices 3 arranged on a remote side (for example, arranged in front of the meeting room), the obtained audiovisual data may be ensured to encompass all users in the specific environment (such as the meeting room). The technical solution of the present disclosure is using these audiovisual data to be the input data of the online conference, and the technical solution may achieve the purpose of implementing a group conference by using only one end-user apparatus 2.

As shown in FIG. 2, there may be multiple end-user apparatuses 2 in a specific environment. In this scenario, each of the end-user apparatuses 2 may respectively wirelessly connect with the server 1 through its end-user application 4. Therefore, each of the end-user apparatuses 2 may respectively obtain the audiovisual data of the one or more external audiovisual devices 3 connected with the server 1 through the streaming approach and respectively launch or join the online conference.

After being executed, the end-user application 4 first sends a request to the server 1 to ask for device information, such as a device name, a device type, a device serial number, a communication protocol, etc., of the one or more external audiovisual devices 3 currently connected with the server 1. Next, the end-user application 4 creates a virtual interface correspondingly on the end-user apparatus 2 in accordance with the device information obtained from the server 1. For example, the end-user application 4 may create a virtual camera based on the device information of the camera 31, to create a virtual audio card based on the device information of the communication device 32, and to create a virtual displayer based on the device information of the displaying monitor 33.

In the present disclosure, after the end-user application 4 creates one or more virtual interfaces, the end-user apparatus 2 may set these virtual interfaces as additional audiovisual data sources. When the end-user apparatus 2 executes the online conference software 5 to launch or join an online conference, the user may select, through a setting page of the end-user apparatus 2, the virtual interface(s) as an audiovisual data source(s), so that the end-user apparatus 2 may use the audiovisual data obtained from the server 1 as the input data of the online conference software 5 to attend the online conference.

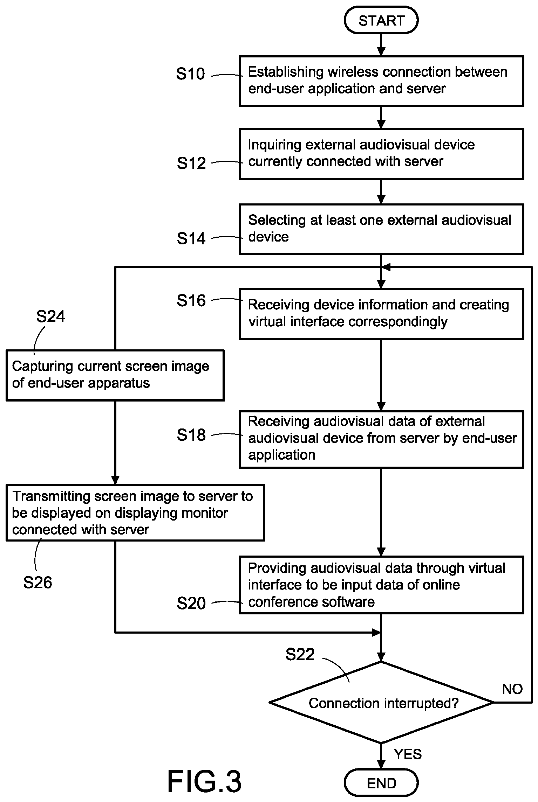

Please refer to FIG. 3, which is a flowchart of a conference method according to the present disclosure. FIG. 3 discloses a virtual online conference method of the present disclosure (referred to as the conference method hereinafter), the conference method is incorporated with the conference system as shown in FIG. 1 and FIG. 2, but not limited thereto.

As shown in FIG. 3, to perform the conference method of the present disclosure, the user needs to first install the end-user application 4 in at least one end-user apparatus 2, and the user needs to connect the server 1 to one or more external audiovisual devices 3 in the environment. Next, the end-user apparatus 2 executes the end-user application 4 and the end-user application 4 establishes a wireless connection with the server 1 through the end-user apparatus 2 (step S10).

After the end-user application 4 establishes the wireless connection with the server 1, the end-user application 4 may directly send a request to the server 1 to inquire the at least one external audiovisual device 3 currently connected with the server 1 (step S12). The server 1 may generate a device list based on all the external audiovisual devices 3 currently connected therewith after receiving the request sent from the end-user application 4. The server 1 transmits the generated device list to the end-user application 4 to notify the end-user application 4 about the usable external audiovisual devices 3 that are currently connected with the server 1. After receiving the device list, the end-user application 4 may directly show the device list on the screen of the end-user apparatus 2. Therefore, the user may check the device list on the end-user apparatus 2 and select at least one external audiovisual device 3 included in the device list through a human machine interface (such as a keyboard, a mouse, or a touch screen, etc.) of the end-user apparatus 2 (step S14).

The user makes a selection for at least one external audiovisual device 3 in the step S14. After the step S14, the server 1 obtains the device information of a corresponding one of the external audiovisual devices in accordance with the user's selection, and the server 1 transmits the obtained device information to the end-user application 4. The end-user application 4 receives the device information from the server 1 and creates the virtual interface correspondingly on the end-user apparatus 2 in accordance with the received device information (step S16).

For example, if the user in the step S14 selects the camera 31 connected with the server 1, the end-user application 4 in the step S16 creates a virtual camera correspondingly based on the device information of the camera 31. If the user in the step S14 selects the communication device 32 connected with the server 1, the end-user application 4 in the step S16 creates a virtual audio card correspondingly based on the device information of the communication device 32. If the user in the step S14 selects the displaying monitor 33 connected with the server 1, the end-user application 4 in the step S16 creates a virtual displayer correspondingly based on the device information of the displaying monitor 33.

After the step S16, the end-user application 4 sends a service request to the server 1. After receiving the service request, the server 1 starts to transmit the audiovisual data of the one or more external audiovisual devices 3 being selected to the end-user application 4 through a streaming approach, and the end-user application 4 receives the audiovisual data through the wireless transmission unit 24 of the end-user apparatus 2 (step S18). In the present disclosure, the end-user apparatus 2 regards the audiovisual data received from the server 1 as the data directly generated by the virtual interface(s), and the end-user apparatus 2 provides the audiovisual data through the virtual interface(s) to be the input data of the online conference software 5 (step S20).

After the online conference software 5 is executed, the user may select a source of providing the required audiovisual data on a setting interface (not shown) of the online conference software 5, and the user may set the above virtual interface(s) created by the end-user application 4 to be the source of the required audiovisual data. When the end-user apparatus 2 launches or joins an online conference through the online conference software 5, the end-user apparatus 2 may use the one or more external audiovisual devices 3 connected with the server 1 as the source of the required audiovisual data without using the internal audiovisual device 23 inside the end-user apparatus 2.

While performing the conference method of the present disclosure, the end-user application 4 continuously determines whether the wireless connection between the end-user application 4 itself and the server 1 is interrupted (step S22), and the end-user application 4 re-executes the step S16 through the step S20 to remain the audiovisual streaming procedure with the server 1 until the connection is interrupted.

It should be mentioned that in addition to the audiovisual data of the external audiovisual devices 3 obtained from the server 1, the end-user apparatus 2 may use a streaming approach to transmit the audiovisual data of the end-user apparatus 2 itself to the server 1 to output through the external audiovisual devices 3. For example, the end-user apparatus 2 may capture the current screen image of its screen (step S24) and transmit the screen image to the server 1, so that the screen image may be displayed on the displaying monitor 33 of the external audiovisual devices 3 connected with the server 1 (step S26). Therefore, all people in the environment in which the displaying monitor 33 locates (such as a meeting room) may directly see the screen image of the end-user apparatus 2 through the displaying monitor 33.

The end-user apparatus 2 may implement the step S24 and the step S26 through software manner. For example, the end-user apparatus 2 may use the end-user application 4 to capture the screen image currently displayed on the screen of the end-user apparatus 2 in real-time, to perform image processing procedures including an image setting, an image analysis, and a format transformation, etc., and to wirelessly transmit the processed screen image to the server 1.

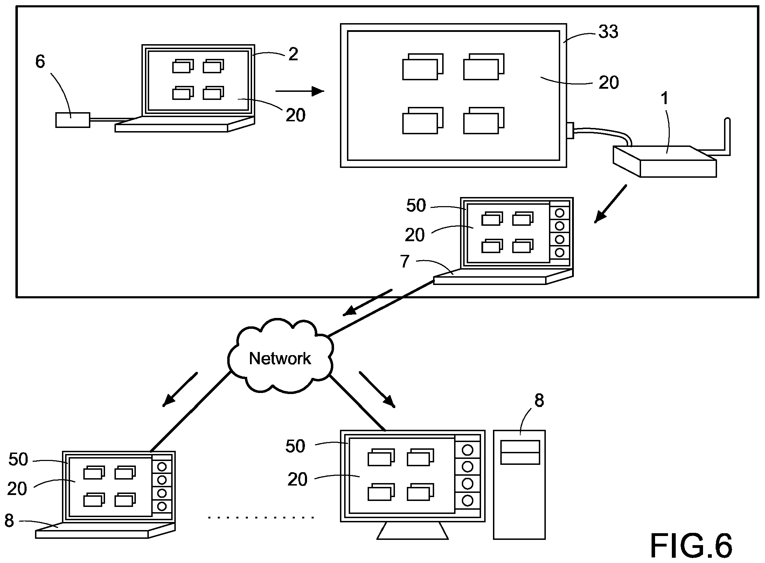

The end-user apparatus 2 may implement the step S24 and the step S26 through hardware manner. For example, the end-user apparatus 2 may connect with a projecting device (such as a projecting device 6 as shown in FIG. 6). The end-user apparatus 2 may connect the projecting device 6 through a high-definition multimedia interface (HDMI) connector, so as to directly output the screen image to the projecting device 6. Also, the projecting device 6 wirelessly connects with the server 1 through a Wi-Fi transmission interface or a Bluetooth transmission interface to wirelessly transmit the screen image being captured to the server 1.

The end-user apparatus 2 connects with the projecting device 6 through an HDMI interface, in other words, the end-user apparatus 2 directly outputs the screen image through the HDMI interface. As a result, it is unnecessary for the end-user apparatus 2 to perform the image processing procedures like the image setting, the image analysis, and the format transformation to the screen image as the software manner needs to. Therefore, the loading of the end-user apparatus 2 may be effectively reduced, and the complexity of the wireless projecting procedure may be simplified as well.

Similarly, while performing the wireless projecting procedure, the end-user application 4 continuously determines whether the connection between the end-user application 4 itself and the server 1 is interrupted (step S22), and re-executes the step S24 through the step S26 to continuously transmit, under the streaming approach, the screen image of the end-user apparatus 2 to the displaying monitor 33 to be displayed until the connection is interrupted.

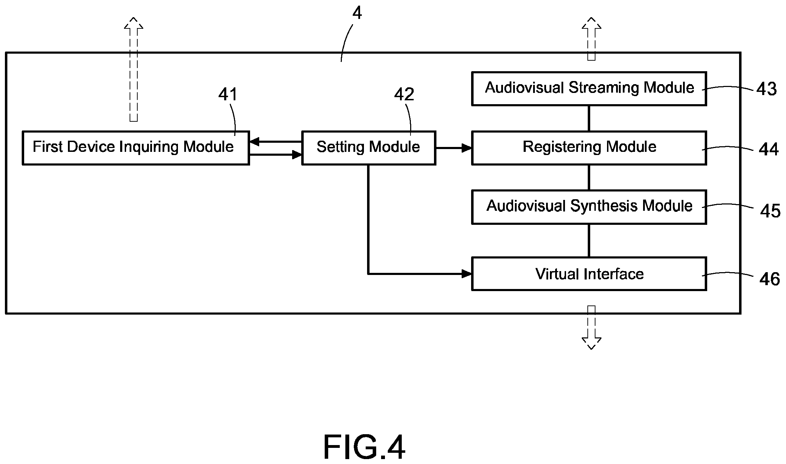

Please refer to FIG. 4, which is a block diagram of a end-user application according to the present disclosure. As disclosed in FIG. 4, the end-user application 4 of the present disclosure may include a first device inquiring module 41, a setting module 42, an audiovisual streaming module 43, a registering module 44, an audiovisual synthesis module 45, and a virtual interface 46, but not limited.

In the present disclosure, the end-user application 4 records computer executable program codes. After the end-user apparatus 2 installs the end-user application 4 and executes the computer executable program codes of the end-user application 4, the computer executable program codes may be logically divided in accordance with the multiple functions of the end-user application 4 (for example, each subroutine of the end-user application 4). Therefore, end-user application 4 may virtually generate the aforementioned first device inquiring module 41, the audiovisual streaming module 43, the registering module 44, the audiovisual synthesis module 45, and the virtual interface 46. In other words, the above modules 41-46 of the present disclosure may be software modules, but not limited thereto. The registering module 44 may be a part of the memory (not shown) inside the end-user apparatus 2, in other words, the registering module 44 may be a hardware module.

After establishing the wireless connection with the server 1, the end-user application 4 uses the first device inquiring module 41 to send an inquiring request to the server 1. After receiving the inquiring request, the server 1 detects the device information of the external audiovisual devices 3 currently connected therewith and then provides the device information to the end-user application 4.

The end-user application 4 uses the first device inquiring module 41 to inquire the server 1 for a device list of the external audiovisual devices 3 currently available. After the user selects a specific external audiovisual device 3 from the device list, the end-user application 4 requires the server 1 for a corresponding device information in accordance with the user's selection.

When the user selects one or more external audiovisual devices 3, the end-user application 4 sends a service request to the server 1 through the audiovisual streaming module 43, so the end-user application 4 may receive the audiovisual data of the one or more external audiovisual devices 3 being selected from the server 1 through a streaming approach. In particular, the server 1 obtains the audiovisual data of the corresponding external audiovisual device(s) 3 in accordance with the user's selection and continuously transmits the audiovisual data to the audiovisual streaming module 43 of the end-user application 4 through the streaming approach.

After receiving the audiovisual data provided from the server 1 through the audiovisual streaming module 43, the end-user application 4 temporarily stores the audiovisual data to the registering module 44. If the server 1 simultaneously provides the audiovisual data of multiple external audiovisual devices 3 (for example, the server 1 simultaneously provides the image data of the camera 31 and the voice data of the communication device 32), the end-user application 4 synthesizes the multiple audiovisual data through the audiovisual synthesis module 45.

In particular, the multiple audiovisual data received by end-user application 4 respectively records a corresponding timestamp. The audiovisual synthesis module 45 may synthesize the multiple audiovisual data based on the timestamps so that an outputted audiovisual data that is synthesized may be synchronized.

When the end-user application 4 obtains the device information of the required external audiovisual device 3, the end-user application 4 may create a corresponding virtual interface 46 through the setting module 42. In the present disclosure, the end-user application 4 controls the first device inquiring module 41 and the audiovisual streaming module 43 to communicate with the server 1 through the setting module 42, and the end-user application 4 performs the control procedure of outputting the audiovisual data of the created virtual interface 46 through the setting module 42. In the present disclosure, the virtual interface 46 outputs the audiovisual data processed by the audiovisual synthesis module 45 to the end-user apparatus 2, so that the end-user apparatus 2 regards the virtual interface 46 as one of the sources of providing the audiovisual data.

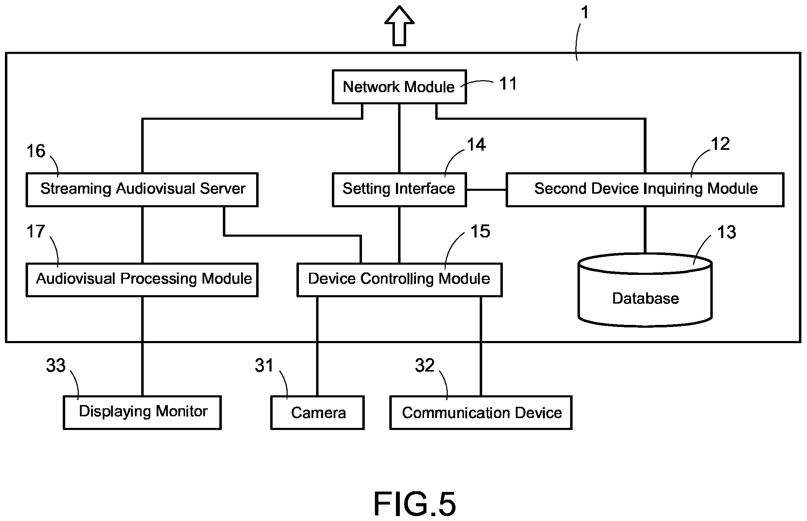

Please refer to FIG. 5, which is a block diagram of a virtual video server according to the present disclosure. As shown in FIG. 5, the server 1 of the present disclosure includes a network module 11, a second device inquiring module 12, a database 13, a setting interface 14, a device controlling module 15, a streaming audiovisual server 16, and an audiovisual processing module 17.

In the present disclosure, the server 1 is a physical device which wirelessly connects with the end-user apparatus 2 and physically connects with the external audiovisual devices 3.

The above modules 11-17 are physical devices arranged inside the server 1. For example, the network module 11 may be implemented by a wireless network device, the database 13 may be implemented by a storing device, the second device inquiring module 12, the setting interface 14, the device controlling module 15, the streaming audiovisual server 16, and the audiovisual processing module 17 may be respectively implemented by a processor(s), but not limited.

The modules 11-17 are software devices. More specific, the server 1 may include an MCU (not shown). When the MCU executes specific computer executable program codes, the MCU may virtually create the above modules 11-17 in accordance with the demand functions.

The above modules 11-17 are combinations of hardware devices and software devices.

The network module 11 may support one or more wireless communication protocols, such as Wi-Fi, Bluetooth, NFC, and Zigbee, etc. The server 1 establishes a wireless connection with the end-user apparatus 2 through the network module 11 to transmit the device list, the device information, and the audiovisual data as discussed above to the end-user application 4.

The device controlling module 15 may support a user required communication protocol. The server 1 connects to the one or more external audiovisual devices 3 through the device controlling module 15 to control the external audiovisual devices 3 and to obtain the device information and the audiovisual data of the external audiovisual devices 3.

The device controlling module 15 is a controlling module supportable to USB video class (UVC) and USB audio class (UAC), and the device controlling module 15 includes at least one USB connector. The server connects with the camera 31 and the communication device 32 of the external audiovisual devices 3 through the USB connector(s), and the server 1 manages and controls the camera 31 and the communication device 32 through the device controlling module 15.

The second device inquiring module 12 connects with the network module 11 and receives an inquiring request from the end-user application 4 through the network module 11. In the present disclosure, the server 1 may obtain the device information of the external audiovisual devices 3 when one or more of the external audiovisual devices 3 are connected to the server 1, and the server 1 stores the device information to the database 13. When receiving the inquiring request from the end-user application 4, the server 1 inquires the database 13 through the second device inquiring module 12 to obtain the device information correspondingly based on the inquiring request, and then the server 1 transmits the device information being obtained to the end-user application 4 through the network module 11.

The setting interface 14 connects with the network module 11, the device controlling module 15, and the database 13. In the present disclosure, the setting interface 14 may provide a web graphic user interface (GUI), and a user may login into the web GUI of the setting interface 14 through the Internet. On the web GUI, the user may perform setting to the one or more external audiovisual devices 3 currently connected with the server 1. For example, the user may set the resolution of the camera 31 or the volume of the communication device, etc., but not limited thereto.

The server 1 controls the device controlling module 15 through the setting interface 14 to obtain the device information of the one or more external audiovisual devices 3 currently connected with the server 1, and the server 1 records the device information being obtained to the database 13.

The audiovisual processing module 17 may support a user required communication protocol. The server 1 connects the one or more of the external audiovisual devices 3 through the audiovisual processing module 17, so as to control the external audiovisual devices 3 and to obtain the device information and the audiovisual data correspondingly.

The audiovisual processing module 17 may be a processing module supportable to an HDMI protocol and including an HDMI connector. The server 1 connects the displaying monitor 33 of the external audiovisual device 3 through the HDMI connector, and the server 1 manages and controls the displaying monitor 33 through the audiovisual processing module 17.

The streaming audiovisual server 16 connects with the network module 11, the device controlling module 15, and the audiovisual processing module 17. In the present disclosure, the server 1 controls the device controlling module 15 and the audiovisual processing module 17 through the streaming audiovisual server 16, so as to obtain the audiovisual data from the external audiovisual devices 3 currently connected therewith and to transmit the audiovisual data being obtained to the end-user apparatus 2 through the network module 11 under a streaming approach.

In the present disclosure, the user may use the end-user apparatus 2 to wirelessly connect with the server 1 within a wireless communication range available to the server 1; therefore, the end-user apparatus 2 may obtain the audiovisual data of the one or more external audiovisual devices 3 connected with the server 1. Through using the one or more external audiovisual devices 3 connected with the server 1 to be the source of providing the audiovisual data of the end-user apparatus 2, it is more convenient for the end-user apparatus 2 to launch or to join an online group conference through the online conference software 5.

Please refer to FIG. 6, which is a schematic diagram of a virtual online conference system. FIG. 6 is used to describe one of the using scenes of the present disclosure.

In FIG. 6, the user makes a presentation through the end-user apparatus 2 in the meeting room. The end-user apparatus 2 connects with a projecting device 6 (also called as a wireless projection server (WPS)). The projecting device 6 and the server 1 use same wireless transmission protocol, so that the projecting device 6 may establish a wireless connection with the server 1. The projecting device 6 directly retrieves a screen image 20 of the end-user apparatus 2 and wirelessly transmits the screen image 20 to the server 1.

The end-user apparatus 2 connects with the projecting device 6 through an HDMI connector, and the projecting device 6 directly retrieves the screen image 20 of the end-user apparatus 2 through HDMI interface. In other words, the conference system of the present disclosure makes the HDMI interface of the end-user apparatus 2 to become wireless through using the projecting device 6, so that the end-user apparatus 2 may directly transmit the screen image 20 to the server 1 wirelessly without performing any image processing procedure to the screen image 20.

The server 1 connects with multiple external audiovisual devices 3 including the displaying monitor 33. The server 1 receives the screen image 20 from the end-user apparatus 2 through a streaming approach, and the server 1 displays the received screen image 20 on the displaying monitor 33. Therefore, all the participants in the meeting room may see the screen image 20 of the end-user apparatus 2 directly from the displaying monitor 33, wherein the screen image 20 being displayed is the content of the presentation.

If a part of the participants of the conference is not in same meeting room and needs to attend the conference through an online conference approach, the end-user application 4, the server 1, and the projecting device 6 of the present disclosure may be used all together.

In particular, a meeting apparatus 7 may be arranged in the meeting room. The meeting apparatus 7 may be, for example but not limited to, a personal computer, a laptop, or a tablet, etc. The end-user application 4 is installed in and executed on the meeting apparatus 7. After executing the end-user application 4, the meeting apparatus 7 may establish a wireless connection with the server 1; therefore, the meeting apparatus 7 may obtain the audiovisual data of all the external audiovisual devices 3 (including the displaying monitor 33) currently connected with the server 1 through a streaming approach.

As shown in FIG. 6, the meeting apparatus 7 may execute the online conference software 5 to launch or to join a specific online conference. Besides, the meeting apparatus 7 uses the audiovisual data (such as the screen image 20) obtained from the server 1 to be the input data (such as a meeting image 50) of the online conference.

The user may use the screen being discussed in the meeting room (i.e., the screen image 20 displayed on the end-user apparatus 2 and the displaying monitor 33) as the input data of the online conference that is currently participated by the meeting apparatus 7, and the meeting apparatus 7 transmits the screen to one or more remote apparatuses 8 that participate in the online conference. Therefore, the users of the remote apparatuses 8 may see the screen image 20 in the meeting screen 50 of the remote apparatuses 8. As a result, the remote users may join the discussion taking place in the meeting room through a manner of online conference.

The meeting room has to be arranged with the end-user apparatus 2 for providing the screen image 20 and the meeting apparatus 7 for participating the online conference.

The the end-user apparatus 2 and the meeting apparatus 7 may be same apparatus.

When multiple users held a group meeting in same environment (such as in a meeting room) and a part of remote users participates the group meeting through a manner of online conference, the conference system and the conference method of the present disclosure may assist the user to simultaneously obtain the image and the voice of all participants in the meeting and the content of the presentation through the external audiovisual devices 3, and to transmit the data to the remote users through the online conference software 5. Therefore, it is unnecessary for the participants in the meeting room to respectively prepare a computer with the online conference software 5. Besides, only one computer is needed in the meeting room to launch or to join the online conference. The computer uses the audiovisual data of the external audiovisual devices 3 as the input data of the online conference, so that the remote users may obtain the image and the voice of all participants in the meeting room. As a result, the complexity of online group conference may be effectively reduced.

## Claims

1. A virtual online conference system, comprising:
an end-user application (4), installed in and executed on an end-user apparatus (2); and
a server (1) wirelessly connected with the end-user apparatus (2) and configured to receive multiple audiovisual data from multiple external audiovisual devices (3) and transmit the multiple audiovisual data to the end-user apparatus (2) under a streaming approach;
wherein the end-user application (4) comprises:
an audiovisual streaming module (43), configured to receive the multiple audiovisual data provided from the server (1);
a first device inquiring module (41), configured to request the server (1) for device information of the multiple external audiovisual devices (3);
a setting module (42), configured to control the first device inquiring module (41) and the audiovisual streaming module (43) to communicate with the server (1) and to create and to control multiple virtual interfaces (46) based on the device information, wherein each of the multiple virtual interfaces (46) corresponds to one of the multiple external audiovisual devices (3); and
an audiovisual synthesis module (45), configured to synthesize the multiple audiovisual data to be received;
wherein the end-user application (4) is configured to create the multiple virtual interfaces (46) correspondingly based on the device information of the multiple external audiovisual devices (3) connected with the server (1) through the setting module (42), such that the multiple audiovisual data are changed from internal audiovisual devices (23) of the end-user apparatus (2) to the multiple external audiovisual devices (3) connected with the server (1) corresponding to the multiple virtual interfaces (46) selected,
wherein the audiovisual synthesis module (45) is configured to synthesize the multiple audiovisual data based on a corresponding timestamp of the multiple audiovisual data such that the multiple audiovisual data are synchronized, and the end-user apparatus (2) is configured to provide the multiple audiovisual data through the multiple virtual interfaces (46) to be an input data of an online conference software (5), such that the end-user apparatus (2) executes the online conference software (5) by using the multiple audiovisual data of the multiple external audiovisual devices (3) obtained from the server (1) as the input data of the online conference software (5) to attend the online conference.

2. The virtual online conference system in claim 1, wherein the multiple external audiovisual devices (3) comprise a camera (31), a communication device (32), or a displaying monitor (33), and the multiple virtual interfaces (46) are a virtual displayer, a virtual camera, or a virtual audio card.

3. The virtual online conference system in any of the preceding claims, wherein the server (1) comprises:
a device controlling module (15), configured to control the multiple external audiovisual devices (3) being connected and to obtain the device information of the multiple external audiovisual devices (3);
a database (13), configured to record the device information;
a second device inquiring module (12), connected with the database (13), configured to receive a request from the end-user application (4) and to inquire the device information from the database (13); and
a network module (11), connected with the device controlling module (15) and the second device inquiring module (12), wherein the server (1) establishes a wireless connection with the end-user apparatus (2) and provides the device information to the end-user apparatus (2) through the network module (11).

4. The virtual online conference system in any of the preceding claims, wherein the server (1) comprises a setting interface (14), the setting interface (14) is configured to provide a web GUI, wherein a user performs setting to the multiple external audiovisual devices (3) being connected through the web GUI.

5. The virtual online conference system in any of the preceding claims, wherein the server (1) comprises:
an audiovisual processing module (17), connected with a displaying monitor (33) of the multiple external audiovisual devices (3); and
a streaming audiovisual server (16), connected with the network module (11), the device controlling module (15), and the audiovisual processing module (17), configured to control the device controlling module (15) and the audiovisual processing module (17) to receive the multiple audiovisual data of the multiple external audiovisual devices (3) and to transmit the multiple audiovisual data being received to the end-user application (4) through the network module (11) under the streaming approach.

6. The virtual online conference system in any of the preceding claims, wherein the device controlling module (15) is a controlling module supportable to USB video class (UVC) and USB audio class (UAC).

7. The virtual online conference system in any of the preceding claims, further comprising a projecting device (6), connected with the end-user apparatus (2) and wirelessly connected with the server (1), configured to obtain a screen image (20) of the end-user apparatus (2) and to transmit the screen image (20) to the server (1), wherein the server (1) displays the screen image (20) on a displaying monitor (33) of the multiple external audiovisual devices (3).

8. The virtual online conference system in any of the preceding claims, wherein the projecting device (6) is configured to connect to the end-user apparatus (2) through a high-definition multimedia interface (HDMI) connector, and is configured to wirelessly connect to the server (1) through a Wi-Fi transmission interface or a Bluetooth transmission interface.

9. A virtual online conference method, incorporated with a virtual online conference system comprising an end-user application (4) and a server (1), wherein the end-user application (4) is installed in and executed on an end-user apparatus (2), and the end-user application (4) comprises an audiovisual streaming module (43) configured to receive multiple audiovisual data provided from the server (1), a first device inquiring module (41) configured to request the server (1) for device information of multiple external audiovisual devices (3), a setting module (42) configured to control the first device inquiring module (41) and the audiovisual streaming module (43) to communicate with the server (1) and to create and to control multiple virtual interfaces (46) based on the device information, and an audiovisual synthesis module (45) configured to synthesize the multiple audiovisual data to be received, and the virtual online conference method comprising:
a) establishing a wireless connection with the server (1) by the end-user application (4) through the end-user apparatus (2);
b) inquiring and selecting multiple external audiovisual devices (3) currently connected with the server (1) by the end-user application (4);
c) receiving the device information of the multiple external audiovisual devices (3) being selected by the end-user application (4) from the server (1) and creating the multiple virtual interfaces (46) correspondingly in accordance with the device information of the multiple external audiovisual devices (3) connected with the server (1) by the setting module (42), such that the multiple audiovisual data are changed from internal audiovisual devices (23) of the end-user apparatus (2) to the multiple external audiovisual devices (3) connected with the server (1) corresponding to the virtual interfaces (46) selected;
d) after the step c), receiving the multiple audiovisual data of the multiple external audiovisual devices (3) being selected by the end-user application (4) from the server (1) under a streaming approach and synthesizing the multiple audiovisual data based on a corresponding timestamp of the multiple audiovisual data by the audiovisual synthesis module (45), such that the multiple audiovisual data are synchronized; and
e) providing the multiple audiovisual data, selected from the multiple external audiovisual devices (3) and are synchronized, being received through the multiple virtual interfaces (46) by the end-user apparatus (2) to be an input data of an online conference software (5), such that the end-user apparatus (2) executes the online conference software (5) by using the multiple audiovisual data of the multiple external audiovisual devices (3) obtained from the server (1) as the input data of the online conference software (5) to attend the online conference.

10. The virtual online conference method in claim 9, wherein the virtual online conference system comprises a projecting device (6) electrically connected with the end-user apparatus (2) and wirelessly connected with the server (1), and the virtual online conference method comprising:
f) capturing a screen image (20) of the end-user apparatus (2) by the projecting device (6); and
g) transmitting the screen image (20) to the server (1) by the projecting device (6) under a streaming approach to be displayed on a displaying monitor (33) of the multiple external audiovisual devices (3).

## Patentansprüche

1. Ein virtuelles Online-Konferenzsystem , umfassend:
eine Endbenutzeranwendung (4), die in einem Endbenutzergerät (2) installiert ist und dort ausgeführt wird; und
einen Server (1), der drahtlos mit der Endbenutzergerät (2) verbunden und so konfiguriert ist, dass er mehrere audiovisuelle Daten von mehreren externen audiovisuellen Geräten (3) empfängt und die mehreren audiovisuellen Daten in einem Streaming-Ansatz an die Endbenutzergerät (2) überträgt,
wobei die Endbenutzeranwendung (4) umfasst:
ein audiovisuelles Streaming-Modul (43), das so konfiguriert ist, dass es die vom Server (1) bereitgestellten mehrfachen audiovisuellen Daten empfängt;
ein erstes Geräteabfragemodul (41), das so konfiguriert ist, dass es den Server (1) nach Geräteinformationen der mehreren externen audiovisuellen Geräte (3) fragt;
ein Einstellmodul (42), das so konfiguriert ist, dass es das erste Geräteabfragemodul (41) und das audiovisuelle Streaming-Modul (43) so steuert, dass sie mit dem Server (1) kommunizieren und mehrere virtuelle Schnittstellen (46) auf der Grundlage der Geräteinformationen erzeugen und steuern, wobei jede der mehreren virtuellen Schnittstellen (46) einem der mehreren externen audiovisuellen Geräte (3) entspricht; und
ein audiovisuelles Synthesemodul (45), das so konfiguriert ist, dass es die mehreren zu empfangenden audiovisuellen Daten synthetisiert;
wobei die Endbenutzeranwendung (4) so konfiguriert ist, dass sie die mehrfachen virtuellen Schnittstellen (46) entsprechend auf der Grundlage der Geräteinformationen der mehrfachen externen audiovisuellen Geräte (3), die mit dem Server (1) über das Einstellungsmodul (42) verbunden sind, erzeugt, so dass die mehrfachen audiovisuellen Daten von den internen audiovisuellen Geräten (23) des Endbenutzergeräts (2) zu den mehrfachen externen audiovisuellen Geräten (3), die mit dem Server (1) verbunden sind, entsprechend den mehrfachen virtuellen Schnittstellen (46), die ausgewählt wurden, geändert werden,
wobei das audiovisuelle Synthesemodul (45) so konfiguriert ist, dass es die mehrfachen audiovisuellen Daten auf der Grundlage eines entsprechenden Zeitstempels der mehrfachen audiovisuellen Daten synthetisiert, so dass die mehrfachen audiovisuellen Daten synchronisiert sind, und das Endbenutzergerät (2) so konfiguriert ist, dass sie die mehrfachen audiovisuellen Daten über die mehrfachen virtuellen Schnittstellen (46) bereitstellt, um Eingabedaten einer Online-Konferenzsoftware (5) zu sein, so dass das Endbenutzergerät (2) die Online-Konferenzsoftware (5) ausführt, indem sie die von dem Server (1) erhaltenen mehrfachen audiovisuellen Daten der mehrfachen externen audiovisuellen Geräte (3) als die Eingabedaten der Online-Konferenzsoftware (5) verwendet, um an der Online-Konferenz teilzunehmen.

2. Das virtuelle Online-Konferenzsystem nach Anspruch 1, wobei die mehreren externen audiovisuellen Geräte (3) eine Kamera (31), ein Kommunikationsgerät (32) oder einen Anzeigemonitor (33) umfassen und die mehreren virtuellen Schnittstellen (46) ein virtuelles Anzeigegerät, eine virtuelle Kamera oder eine virtuelle Audiokarte sind.

3. Das virtuelle Online-Konferenzsystem nach einem der vorhergehenden Ansprüche, wobei der Server (1) umfasst:
ein Gerätesteuerungsmodul (15), das so konfiguriert ist, dass es die mehreren angeschlossenen externen audiovisuellen Geräte (3) steuert und die Geräteinformationen der mehreren externen audiovisuellen Geräte (3) erhält;
eine Datenbank (13), die zur Aufzeichnung der Geräteinformationen konfiguriert ist;
ein zweites Geräteabfragemodul (12), das mit der Datenbank (13) verbunden ist und so konfiguriert ist, dass es eine Anfrage von der Endbenutzeranwendung (4) empfängt und die Geräteinformationen von der Datenbank (13) abfragt; und
ein Netzwerkmodul (11), das mit dem Gerätesteuermodul (15) und dem zweiten Geräteabfragemodul (12) verbunden ist, wobei der Server (1) eine drahtlose Verbindung mit der Endbenutzergerät (2) herstellt und die Geräteinformationen über das Netzwerkmodul (11) an die Endbenutzergerät (2) liefert.

4. Das virtuelle Online-Konferenzsystem nach einem der vorhergehenden Ansprüche, wobei der Server (1) eine Einstellungsschnittstelle (14) umfasst, wobei die Einstellungsschnittstelle (14) so konfiguriert ist, dass sie eine Web-GUI bereitstellt, wobei ein Benutzer die Einstellung der mehreren externen audiovisuellen Geräte (3), die über die Web-GUI verbunden sind, durchführt.

5. Das virtuelle Online-Konferenzsystem nach einem der vorhergehenden Ansprüche, wobei der Server (1) umfasst:
ein audiovisuelles Verarbeitungsmodul (17), das mit einem Anzeigemonitor (33) der mehreren externen audiovisuellen Geräte (3) verbunden ist; und
einen audiovisuellen Streaming-Server (16), der mit dem Netzwerkmodul (11), dem Gerätesteuermodul (15) und dem audiovisuellen Verarbeitungsmodul (17) verbunden ist und so konfiguriert ist, dass er das Gerätesteuermodul (15) und das audiovisuelle Verarbeitungsmodul (17) so steuert, dass sie die mehrfachen audiovisuellen Daten der mehrfachen externen audiovisuellen Geräte (3) empfangen und die mehrfachen audiovisuellen Daten, die empfangen werden, über das Netzwerkmodul (11) nach dem Streaming-Ansatz an die Endbenutzeranwendung (4) übertragen.

6. Das virtuelle Online-Konferenzsystem nach einem der vorhergehenden Ansprüche, wobei das Gerätesteuermodul (15) ein Steuermodul ist, das die USB-Videoklasse (UVC) und die USB-Audioklasse (UAC) unterstützt.

7. Das virtuelle Online-Konferenzsystem nach einem der vorhergehenden Ansprüche, das ferner eine Proj ektionsvorrichtung (6) umfasst, die mit dem Endbenutzergerät (2) verbunden ist und drahtlos mit dem Server (1) verbunden ist und so konfiguriert ist, dass sie ein Bildschirmbild (20) des Endbenutzergeräts (2) erhält und das Bildschirmbild (20) an den Server (1) überträgt, wobei der Server (1) das Bildschirmbild (20) auf einem Anzeigemonitor (33) der mehreren externen audiovisuellen Geräte (3) anzeigt.

8. Das virtuelle Online-Konferenzsystem nach einem der vorhergehenden Ansprüche, wobei die Projektionsvorrichtung (6) so konfiguriert ist, dass sie über einen HDMI-Anschluss (High-Definition Multimedia Interface) mit dem Endbenutzergerät (2) verbunden ist, und so konfiguriert ist, dass sie über eine Wi-Fi-Übertragungsschnittstelle oder eine Bluetooth-Übertragungsschnittstelle drahtlos mit dem Server (1) verbunden ist.

9. Virtuelles Online-Konferenzverfahren, das in ein virtuelles Online-Konferenzsystem integriert ist, das eine Endbenutzeranwendung (4) und einen Server (1) umfasst, wobei die Endbenutzeranwendung (4) in einem Endbenutzergerät (2) installiert ist und auf dieser ausgeführt wird und die Endbenutzeranwendung (4) ein audiovisuelles Streaming-Modul (43) umfasst, das so konfiguriert ist, dass es mehrere audiovisuelle Daten empfängt, die von dem Server (1) bereitgestellt werden, ein erstes Geräteabfragemodul (41), das so konfiguriert ist, dass es den Server (1) nach Geräteinformationen mehrerer externer audiovisueller Geräte (3) anfragt, ein Einstellungsmodul (42), das so konfiguriert ist, dass es das erste Geräteabfragemodul (41) und das audiovisuelle Streaming-Modul (43) steuert, um mit dem Server (1) zu kommunizieren und mehrere virtuelle Schnittstellen (46) auf der Grundlage der Geräteinformationen zu erzeugen und zu steuern, und ein audiovisuelles Synthesemodul (45), das so konfiguriert ist, dass es die mehreren zu empfangenden audiovisuellen Daten synthetisiert, und wobei das virtuelle Online-Konferenzverfahren umfasst:
a) Aufbau einer drahtlosen Verbindung mit dem Server (1) durch die Endbenutzeranwendung (4) über das Endbenutzergerät (2);
b) Abfrage und Auswahl mehrerer externer audiovisueller Geräte (3), die derzeit über die Endbenutzeranwendung (4) mit dem Server (1) verbunden sind;
c) Empfangen der Geräteinformationen der mehreren externen audiovisuellen Geräte (3), die von der Endbenutzeranwendung (4) ausgewählt werden, von dem Server (1) und entsprechendes Erzeugen der mehreren virtuellen Schnittstellen (46) in Übereinstimmung mit den Geräteinformationen der mehreren externen audiovisuellen Geräte (3), die mit dem Server (1) durch das Einstellmodul (42) verbunden sind, so dass die mehrfachen audiovisuellen Daten von den internen audiovisuellen Geräten (23) der Endbenutzergerät (2) zu den mehrfachen externen audiovisuellen Geräten (3), die mit dem Server (1) verbunden sind, entsprechend den ausgewählten virtuellen Schnittstellen (46) geändert werden;
d) nach dem Schritt c), Empfangen der mehreren audiovisuellen Daten der mehreren externen audiovisuellen Vorrichtungen (3), die von der Endbenutzeranwendung (4) ausgewählt werden, von dem Server (1) unter einem Streaming-Ansatz und Synthetisieren der mehreren audiovisuellen Daten auf der Grundlage eines entsprechenden Zeitstempels der mehreren audiovisuellen Daten durch das audiovisuelle Synthesemodul (45), so dass die mehreren audiovisuellen Daten synchronisiert werden; und
e) Bereitstellen der mehrfachen audiovisuellen Daten, die von den mehrfachen externen audiovisuellen Vorrichtungen (3) ausgewählt werden und synchronisiert sind, die über die mehrfachen virtuellen Schnittstellen (46) von dem Endbenutzergerät (2) empfangen werden, um Eingabedaten einer Online-Konferenzsoftware (5) zu sein, so dass das Endbenutzergerät (2) die Online-Konferenzsoftware (5) unter Verwendung der mehrfachen audiovisuellen Daten der mehrfachen externen audiovisuellen Vorrichtungen (3), die von dem Server (1) erhalten werden, als die Eingabedaten der Online-Konferenzsoftware (5) ausführt, um an der Online-Konferenz teilzunehmen.

10. Das virtuelle Online-Konferenzverfahren nach Anspruch 9, wobei das virtuelle Online-Konferenzsystem eine Projektionsvorrichtung (6) umfasst, die elektrisch mit dem Endbenutzergerät (2) und drahtlos mit dem Server (1) verbunden ist, und das virtuelle Online-Konferenzverfahren umfasst:
f) Erfassen eines Bildschirmbildes (20) des Endbenutzergeräts (2) durch die Projektionsvorrichtung (6); und
g) Übertragung des Bildschirmbildes (20) an den Server (1) durch die Projektionsvorrichtung (6) in einem Streaming-Verfahren zur Anzeige auf einem Anzeigemonitor (33) der mehreren externen audiovisuellen Geräte (3).

## Revendications

1. Un système de conférence virtuelle en ligne , comprenant :
une application d'utilisateur final (4) installée et exécutée dans un dispositif d'utilisateur final (2) ; et
un serveur (1) connecté sans fil à l'équipement d'utilisateur final (2) et configuré pour recevoir une pluralité de données audiovisuelles d'une pluralité d'équipements audiovisuels externes (3) et pour transmettre la pluralité de données audiovisuelles à l'équipement d'utilisateur final (2) dans une approche de diffusion en continu ;
dans lequel l'application d'utilisateur final (4) comprend
un module de diffusion audiovisuelle en continu (43) configuré pour recevoir les données audiovisuelles multiples fournies par le serveur (1) ;
un premier module d'interrogation de dispositif (41) configuré pour interroger le serveur (1) sur des informations de dispositif de la pluralité de dispositifs audiovisuels externes (3) ;
un module de réglage (42) configuré pour commander le premier module d'interrogation de dispositif (41) et le module de diffusion audiovisuelle en continu (43) pour communiquer avec le serveur (1) et pour générer et commander une pluralité d'interfaces virtuelles (46) sur la base des informations de dispositif, chacune de la pluralité d'interfaces virtuelles (46) correspondant à un de la pluralité de dispositifs audiovisuels externes (3) ; et
un module de synthèse audiovisuelle (45) configuré pour synthétiser la pluralité de données audiovisuelles à recevoir ;
dans lequel l'application d'utilisateur final (4) est configurée pour générer les interfaces virtuelles multiples (46) respectivement sur la base des informations de dispositif des dispositifs audiovisuels externes multiples (3) connectés au serveur (1) via le module de réglage (42), de sorte que les données audiovisuelles multiples sont modifiées depuis les dispositifs audiovisuels internes (23) du dispositif d'utilisateur final (2) vers les dispositifs audiovisuels externes multiples (3) connectés au serveur (1) en fonction des interfaces virtuelles multiples (46) sélectionnées ,
dans lequel le module de synthèse audiovisuelle (45) est configuré pour synthétiser les données audiovisuelles multiples sur la base d'un horodatage correspondant des données audiovisuelles multiples, de sorte que les données audiovisuelles multiples sont synchronisées, et d e dispositif d'utilisateur final (2) est configuré pour fournir les données audiovisuelles multiples via les interfaces virtuelles multiples (46), pour être des données d'entrée d'un logiciel de conférence en ligne (5), de sorte que le dispositif d'utilisateur final (2) exécute le logiciel de conférence en ligne (5) en utilisant les données audiovisuelles multiples des dispositifs audiovisuels externes multiples (3) obtenues à partir du serveur (1) comme les données d'entrée du logiciel de conférence en ligne (5) pour participer à la conférence en ligne .

2. Le système de conférence virtuelle en ligne selon la revendication 1, dans lequel la pluralité de dispositifs audiovisuels externes (3) comprend une caméra (31), un dispositif de communication (32) ou un moniteur d'affichage (33), et la pluralité d'interfaces virtuelles (46) est un dispositif d'affichage virtuel, une caméra virtuelle ou une carte audio virtuelle.

3. Le système de conférence virtuelle en ligne selon l'une des revendications précédentes, dans lequel le serveur (1) comprend :
un module de commande de dispositif (15) configuré pour commander la pluralité de dispositifs audiovisuels externes connectés (3) et pour recevoir les informations de dispositif de la pluralité de dispositifs audiovisuels externes (3) ;
une base de données (13) configurée pour enregistrer les informations relatives à l'appareil ;
un second module d'interrogation de dispositif (12) connecté à la base de données (13) et configuré pour recevoir une demande de l'application d'utilisateur final (4) et pour interroger les informations de dispositif à partir de la base de données (13) ; et
un module de réseau (11) connecté au module de commande de dispositif (15) et au second module d'interrogation de dispositif (12), le serveur (1) établissant une connexion sans fil avec le dispositif d'utilisateur final (2) et fournissant les informations de dispositif au dispositif d'utilisateur final (2) via le module de réseau (11).

4. Le système de conférence virtuelle en ligne selon l'une quelconque des revendications précédentes, dans lequel le serveur (1) comprend une interface de réglage (14), l'interface de réglage (14) étant configurée pour fournir une interface utilisateur graphique Web, dans lequel un utilisateur effectue le réglage de la pluralité de dispositifs audiovisuels externes (3) connectés via l'interface utilisateur graphique Web.

5. Le système de conférence virtuelle en ligne selon l'une des revendications précédentes, dans lequel le serveur (1) comprend :
un module de traitement audiovisuel (17) connecté à un moniteur d'affichage (33) de la pluralité de dispositifs audiovisuels externes (3) ; et
un serveur de diffusion audiovisuelle (16) connecté au module de réseau (11), au module de commande d'appareil (15) et au module de traitement audiovisuel (17), et configuré pour commander le module de commande d'appareil (15) et le module de traitement audiovisuel (17) de manière à ce qu'ils puissent diffuser des données audiovisuelles en continu, pour recevoir les données audiovisuelles multiples des dispositifs audiovisuels externes multiples (3) et pour transmettre les données audiovisuelles multiples reçues à l'application d'utilisateur final (4) par l'intermédiaire du module de réseau (11) selon l'approche de diffusion en continu.

6. Le système de conférence virtuelle en ligne selon l'une des revendications précédentes, dans lequel le module de commande de dispositif (15) est un module de commande qui supporte la classe vidéo USB (UVC) et la classe audio USB (UAC).

7. Le système de conférence virtuelle en ligne selon l'une quelconque des revendications précédentes, qui comprend en outre un dispositif de projection (6) connecté au dispositif d'utilisateur final (2) et connecté sans fil au serveur (1) et configuré pour recevoir une image d'écran (20) du dispositif d'utilisateur final (2) et pour transmettre l'image d'écran (20) au serveur (1), le serveur (1) affichant l'image d'écran (20) sur un moniteur d'affichage (33) de la pluralité de dispositifs audiovisuels externes (3).

8. Le système de conférence virtuelle en ligne selon l'une des revendications précédentes, dans lequel le dispositif de projection (6) est configuré pour être connecté au dispositif utilisateur final (2) via un port HDMI (High-Definition Multimedia Interface) et est configuré pour être connecté sans fil au serveur (1) via une interface de transmission Wi-Fi ou une interface de transmission Bluetooth.

9. Procédé de conférence virtuelle en ligne intégré dans un système de conférence virtuelle en ligne comprenant une application d'utilisateur final (4) et un serveur (1), l'application d'utilisateur final (4) étant installée et exécutée sur un dispositif d'utilisateur final (2), l'application d'utilisateur final (4) comprenant un module de diffusion audiovisuelle en continu (43) configuré pour recevoir une pluralité de données audiovisuelles fournies par le serveur (1), un premier module d'interrogation de dispositif (41) configuré pour, pour demander au serveur (1) des informations sur les appareils de plusieurs appareils audiovisuels externes (3), un module de réglage (42) configuré pour commander le premier module d'interrogation d'appareils (41) et le module de diffusion audiovisuelle en continu (43), pour communiquer avec le serveur (1) et pour générer et commander une pluralité d'interfaces virtuelles (46) sur la base des informations de dispositif, et un module de synthèse audiovisuelle (45) configuré pour synthétiser la pluralité de données audiovisuelles à recevoir, et dans lequel le procédé de conférence virtuelle en ligne comprend :
a) établissement d'une connexion sans fil avec le serveur (1) par l'application d'utilisateur final (4) via le dispositif d'utilisateur final (2) ;
b) interroger et sélectionner plusieurs appareils audiovisuels externes (3) actuellement connectés au serveur (1) via l'application utilisateur final (4) ;
c) recevoir du serveur (1) les informations de dispositif de la pluralité de dispositifs audiovisuels externes (3) sélectionnés par l'application d'utilisateur final (4) et générer en conséquence la pluralité d'interfaces virtuelles (46) en fonction des informations de dispositif de la pluralité de dispositifs audiovisuels externes (3), connectés au serveur (1) par le module de réglage (42), de sorte que les données audiovisuelles multiples sont modifiées depuis les dispositifs audiovisuels internes (23) de l'équipement de l'utilisateur final (2) vers les dispositifs audiovisuels externes multiples (3) connectés au serveur (1) en fonction des interfaces virtuelles sélectionnées (46) ;
d) après l'étape c), la réception de la pluralité de données audiovisuelles de la pluralité de dispositifs audiovisuels externes (3) sélectionnés par l'application d'utilisateur final (4) à partir du serveur (1) selon une approche de diffusion en continu et la synthèse de la pluralité de données audiovisuelles sur la base d'un horodatage correspondant de la pluralité de données audiovisuelles par le module de synthèse audiovisuelle (45) de telle sorte que la pluralité de données audiovisuelles soient synchronisées ; et
e) fournir les données audiovisuelles multiples sélectionnées et synchronisées à partir des dispositifs audiovisuels externes multiples (3) reçues par l'intermédiaire des interfaces virtuelles multiples (46) à partir du dispositif d'utilisateur final (2) pour être des données d'entrée d'un logiciel de conférence en ligne (5), de sorte que le dispositif d'utilisateur final (2) exécute le logiciel de conférence en ligne (5) en utilisant les données audiovisuelles multiples des dispositifs audiovisuels externes multiples (3) reçues du serveur (1) comme les données d'entrée du logiciel de conférence en ligne (5) pour participer à la conférence en ligne.

10. Le procédé de conférence virtuelle en ligne selon la revendication 9, dans lequel le système de conférence virtuelle en ligne comprend un dispositif de projection (6) connecté électriquement au dispositif utilisateur final (2) et sans fil au serveur (1), et le procédé de conférence virtuelle en ligne :
f) la capture d'une image d'écran (20) de l'équipement de l'utilisateur final (2) par le dispositif de projection (6) ; et
g) transmission de l'image d'écran (20) au serveur (1) par le dispositif de projection (6) selon un procédé de diffusion en continu pour affichage sur un moniteur d'affichage (33) de la pluralité d'appareils audiovisuels externes (3).
